# EUROPEAN PATENT SPECIFICATION

(11) **EP 4 532 089 B1**
(45) Date of publication and mention of the grant of the patent: **23.09.2026**
(21) Application number: 23815360.5
(22) Date of filing: 29.05.2023
(51) Int. Cl.: B01F 23/2361, B01F 23/237, B01F 35/60, A23L 2/54

(54) **A SPARKLING WATER MAKING DEVICE**
VORRICHTUNG ZUR HERSTELLUNG VON SCHAUMWASSER
DISPOSITIF DE FABRICATION D'EAU GAZEUSE

(30) Priority: 30.05.2022 FI 20225468
(43) Date of publication of application: 09.04.2025
(73) Proprietor: Mysoda Oy, 00880 Helsinki (FI)
(72) Inventor: SOLOMON, David, 00880 Helsinki (FI)
(74) Representative: Primrose Oy
(86) International application number: PCT/FI2023/050300
(87) International publication number: WO 2023/233073

(56) References cited:
- EP-B1- 0 172 815
- WO-A1-2020/148294
- WO-A1-2023/052460
- WO-A1-97/25130
- US-A- 4 323 090
- US-A- 4 342 710
- US-A1- 2017 246 597
- US-A1- 2017 246 597

## Description

### FIELD OF THE INVENTION

The present invention relates to a sparkling water making device and more particularly to a sparkling water device according to independent claim 1.

### BACKGROUND OF THE INVENTION

Typical sparkling water making devices are only suitable for plastic water containers, because during carbonation the water containers are in no way protected from breakage.

Prior art teaches also sparkling water making devices which are suitable for glass water containers. The publication EP 1 793 917 B1 discloses a device for carbonating a liquid in a container with a pressurized gas comprising a receiving flask for the container and a filling head for adding gas into said liquid in the container. The receiving flask and the filling head are movable in relation to each other between an insertion position and a carbonating position. In the insertion position the filling head is spaced from the receiving flask in a vertical direction. In the carbonating position, the receiving flask and the filling head are in contact with each other such as to form a substantially closed cavity.

Document EP 0172815 B1 discloses a portable machine for carbonating liquid contained in a bottle. The bottle is loaded into the machine through a front opening and a cover for closing the opening is interlocked with a gas supply valve so that gas can only be delivered to the nozzle (66) when the cover is closed. The cover is opened and closed by rotating a knob which is depressed to open the gas valve. Document WO 97/25130 A1 discloses a system of carbonizing water as part of making a carbonized beverage and document US 2017/246597 A1 discloses a domestic carbonation appliance.

One of the problems associated with the prior art is that the vertical movement of the filling head requires space for operating the device which has to be taken into account in the placement of the device. Another problem associated with the prior art is that the movement of the filling head makes the device unstable, and operating the device is difficult or even impossible one handed.

### BRIEF DESCRIPTION OF THE INVENTION

An object of the present invention is to provide a sparkling water making device which overcomes the problems caused by the prior art due to space requirements of the device. Another object of the present invention is to provide a sparkling water making device which is stable, and which can be operated one handed.

The objects of the invention are achieved by a sparkling water making device which is characterized by what is stated in the independent claim. The preferred embodiments of the invention are disclosed in the dependent claims.

The invention is based on the idea of providing a sparkling water making device which is operated through a single operating member so that it is the simplest to use and at the same time secure.

The invention is also based on the idea of providing a mechanical sparkling water making device which is operable without any electricity or electrical components or any power source providing current to the sparkling water making device. The sparkling water making device according to the invention is completely mechanical device, which also only has mechanical parts for operating the sparkling water making device.

The invention is also based on the idea of providing a container compartment in connection with the sparkling water making device for the water container which remains in place at all times, and which protects the water container so that glass containers can be used in the sparkling water device.

In the context of this application, a water container means, for example, a water bottle or a similar water tank having an orifice through which water can be poured out of the water container, for example into a glass. The most preferable example of the water container is a water bottle, and the sparkling water making device according to the invention is especially suitable for carbonating water provided in a water bottle made of glass. In the context of this application, the water to be carbonated in a water container may contain additives, flavours or other ingredients that give the water taste, colour, or other properties. Therefore, water in the context of this application means a liquid that is mainly water, for example 90% water.

A sparkling water making device for carbonating water in a water container with pressurized gas according to the invention comprises a body having a bottom, a top and a body structure extending between the bottom and the top. The body having a container compartment for the water container, a carbonation head for connecting the water container to the sparkling water making device and for carbonating water in the water container, a door, and a single operating member. The container compartment having an opening through which the water container is placed inside the container compartment. The carbonation head is provided in connection with the container compartment and the door is provided in connection with the opening. The door being arranged to move between an open position, in which the container compartment is accessible from outside the container compartment through the opening, and a closed position, in which the opening is closed with the door to provide a closed container compartment. The single operating member is provided for operating both the carbonation head and the door.

In other words, the body has a container compartment into which the water container is inserted through the opening in the container compartment. The door is arranged to close the opening of the container compartment for providing a closed container compartment such that the carbonation can be performed for water in a glass water container, and the door is arranged to open the opening of the container compartment for placing the water container to the container compartment and for removing the water container from the container compartment.

The door is preferably arranged to move in a horizontal direction such that the sparkling water making device maintains the same position in a vertical direction despite the state of use of the device. The door in connection with the container compartment is arranged to close the container compartment and thus enclose the water container inside the container compartment during the carbonation of the water so that, in the event of breakage of the glass of the water container, the fragments do not end outside the container compartment.

According to the invention the door is a sliding door, which the sliding door is provided in connection with the opening, the sliding door being arranged to slide between the open position, in which the container compartment is accessible from outside the container compartment through the opening, and the closed position, in which the opening is closed with the sliding door to provide a closed container compartment.

The sparkling water making device according to the invention comprises a horizontally movable sliding door, the sliding door thereby moving horizontally from an open position to a closed position, and from the closed position to the open position. In a preferred embodiment of the invention the sliding door is arranged to move along a circular trajectory path in a horizontal direction. This means that the trajectory path of the sliding door forms a circle or part of a circle, so that the circular path has the same centre point at everywhere. This also means that the sliding door is a curved sliding door with a centre of curvature being the same as the centre of curvature of the circular trajectory path. The curved sliding door is moving along the circular trajectory path in the horizontal direction between the open position and the closed position.

However, the sliding door can alternatively be arranged to slide in a vertical direction or in an oblique direction.

In other words, the sliding door can be arranged to move horizontally or vertically or obliquely.

The carbonation head is arranged to form together with the water container an interlocking connection so that the water container is connected through the carbonation head to the sparkling water making device and remains securely in place during the carbonation.

The single operating member is arranged to operate both the carbonation head and the door. This means that there are no separate operating members for the carbonation head and the door, but the same operating member operates both the carbonation head and the door.

According to the invention in the closed position the sliding door is arranged to cover the opening of the container compartment and in the open position the sliding door is arranged aside the opening of the container compartment.

In other words, when the opening of the container compartment is open so that the water container can be inserted into the container compartment or the water container can be removed from the container compartment, the sliding door is away from the opening, i.e., the sliding door is not covering the opening. The container compartment can be accessed only when the sliding door is not covering the opening. When the sliding door is set to cover the opening, the container compartment is closed, and the inside cannot be accessed from outside the container compartment.

According to the invention the container compartment is arranged in connection with the body structure between the bottom and the top of the body.

In other words, the container compartment forming a connection with the body structure, either directly or indirectly, and in a preferred embodiment of the invention the container compartment is arranged within the body structure.

According to an embodiment of the invention the sliding door is arranged to move outside the body or along an outer surface of the body between the open position and the closed position.

In other words, the sliding door covering the opening of the container compartment is arranged to move between the open position and the closed position outside the container compartment.

According to an embodiment of the invention the sliding door is arranged to move inside the body between the open position and the closed position. Alternatively, the sliding door is arranged to move inside the container compartment between the open position and the closed position. Alternatively, the sliding door is arranged to move in between the container compartment and the body between the open position and the closed position.

In other words, the sliding door is arranged to move inside the body when the container compartment is provided within the body or within the body structure, or the sliding door is arranged to move inside the container compartment or in a place between the container compartment and the body. In these embodiments the sliding door is provided such that it moves at least within the outermost surface of the sparkling water making device. This provides the least space required for the device when used.

In a preferable embodiment of the invention the sliding door is arranged to move along a curved direction of movement. In other words, the sliding door is arranged to move along a curved path between the open position and the closed position. The curved movement path of the sliding door is particularly advantageous, because then the sliding door does not take up extra space on the side of the device or the device does not have to be made larger in the width direction due to the sliding door. The sliding door is then able to move along a curved path from the closed position of the opening to the open position of the opening by turning according to the curved path towards the opposite wall of the device or container compartment with respect to the opening or even at least partly along the opposite wall of the opening. This is especially advantageous when the container compartment has a cylindrical or otherwise curved form.

According to the invention the sliding door is manually movable between the open position and the closed position.

In other words, the sliding door can preferably be pushed and pulled between the open position and the closed position.

According to the invention the sparkling water making device further comprises a door operating mechanism connected to the door, the door operating mechanism is operated by the single operating member.

Alternatively, the sparkling water making device comprises a door operating mechanism connected to the sliding door, the door operating mechanism is arranged to move the sliding door between the open position and the closed position such that the door operating mechanism is arranged to move the sliding door from the open position to the closed position. Alternatively, the door operating mechanism is arranged to move the sliding door between the open position and the closed position such that the door operating mechanism is arranged to move the sliding door from the closed position to the open position. Alternatively, the door operating mechanism is arranged to move the sliding door between the open position and the closed position such that the door operating mechanism is arranged to move the sliding door from the closed position to the open position and from the open position to the closed position.

In the most preferred embodiment of the invention the door operating mechanism is arranged to move the sliding door from the closed position to the open position and the sliding door is moved from the open position to the closed position manually by pulling it to the closed position by the user.

In other words, when the sliding door is operated through the door operating mechanism, the door operating mechanism may move the sliding door only to the closed position and then the sliding door can be pushed manually by hand to provide the open position such that the opening to the container compartment is open and accessible. Alternatively, the sliding door can be pulled to the closed position manually by hand and then the door operating mechanism may move the sliding door to the open position. Alternatively, the door opening mechanism may be arranged to move the sliding door to the closed position and to the open position such that there is no need for manually opening or closing the container compartment by hand. Manually in this context means that the sliding door is pushed or pulled by hand in order to make the sliding door to move between the open position and the closed position. The closed position means that the opening to the container compartment is closed with the sliding door and the open position means that the container compartment is open and accessible through the opening.

According to the invention the single operating member having a first operating position in which the carbonation head is arranged to carbonate water in the water container, and a second operating position in which the door is arranged to be moved from the closed position to the open position.

In other words, the single operating member means that there is only one operating member through which the user of the sparkling water making device operates both the carbonation of the water and the movement of the door. Therefore, the single operating member has the first operating position and the second operating position for the two separate functions. This guarantees that the door cannot be opened in the middle of carbonation. The single operating member may also have a neutral position between the first operating position and the second operating position. The neutral position does not cause any kind of activity in the device.

According to the invention the sparkling water making device comprises a first switch arranged to operate the door operating mechanism for moving the door. The first switch is activated in the second operating position of the single operating member. The door can be a sliding door.

The first switch operating the sliding door is a mechanical switch mechanically coupled to the sliding door for operating it.

According to the invention in the second operating position of the single operating member, the first switch is arranged to activate the door operating mechanism so that the door operating mechanism releases the door to move from the closed position to the open position.

According to the invention in the second operating position of the single operating member, the first switch is arranged to release excess pressure from the water container connected to the carbonation head, and to activate the door operating mechanism so that the door operating mechanism releases the door to move from the closed position to the open position.

According to the invention, the first switch is arranged to release the excess pressure from the water container prior releasing the door to move from the closed position to the open position.

In other words, by operating the single operating member in the second operating position, the first switch either first releases the excess pressure from the water container connected to the carbonation head, and then activates the door operating mechanism so that the door opens, or the first switch simply only activates the door to move from the closed position to the open position. The latter one being especially in those situations in which the compartment is closed without the water container for example when the device is not used, and the compartment is wanted to keep closed.

The sliding door operating mechanism comprises a spring connection with the sliding door, whereby releasing the spring to a free position the sliding door opens. The free position of the spring is the position in which the spring is not compressed. Alternatively, or in addition, the sliding door operating mechanism may comprise a magnetic connection in which, by releasing the magnetic connection, the sliding door moves to the open position. The spring can alternatively be a gas spring.

The spring connection has the spring as a pre-stressing member which is arranged to be pre-stressed when the sliding door is in the closed position. This means that the spring is compressed when the sliding door is in the closed position. The spring, i.e., the pre-stressing member, is arranged to move the sliding door to the open position when the sliding door is released from the closed position.

The door operating mechanism further comprises a release member which releases the sliding door to move from the closed position to the open position. The release member is preferably a hook or a latch which keeps the sliding door in the closed position while the spring is compressed and when the sliding door is released by moving the release member away from the contact with the sliding door, the tension of the spring is released, and the door moves from the closed position to the open position.

In a preferable embodiment of the invention the door operating mechanism or the sliding door itself comprises a counter buffer, which slows down the movement of the sliding door so that the sliding door moves to the open position softly, the open position being the position in which the container compartment is accessible from outside the container compartment through the opening.

In a most preferable embodiment of the invention the curved sliding door is arranged to move horizontally along a curved path from the closed position to the open position by operating the first switch which is mechanically connected to the mechanical door operating mechanism. Operation of the door operating mechanism opens the opening to the container compartment by moving the curved sliding door softly from the closed position to the open position along the curved trajectory path. The soft movement of the curved sliding door is provided by the counter buffer which softens especially the end part of the movement when the sliding door is near to the totally open position. This means that the movement of the sliding door along the curved path becomes slower towards the end of the movement when the sliding door moves from the closed position to the open position.

According to the invention the sparkling water making device comprises a carbonation mechanism connected to the carbonation head, the carbonation mechanism is arranged to provide carbon dioxide from a carbon dioxide cylinder to the water container through the carbonation head for carbonating water in the water container with pressurized gas.

In other words, the sparkling water making device comprises, when the device is ready for use, a carbon dioxide cylinder which is placed in the sparkling water making device and operated through the carbonation mechanism to supply carbon dioxide to the water in the water container. The carbon dioxide cylinder comprises a valve and the carbonation mechanism is arranged to operate the valve with an actuator. When the actuator opens the valve, carbon dioxide is fed from the carbon dioxide cylinder through the carbonation head to the water in the water container. The valve is typically a pin valve which is pressed by the actuator in order to provide carbon dioxide flow out from the carbon dioxide cylinder.

According to the invention the sparkling water making device comprises a second switch arranged to operate the carbonation mechanism for providing carbon dioxide from the carbon dioxide cylinder through the carbonation head for carbonating the water in the water container. The second switch is activated in the first operating position of the single operating member.

In other words, the carbonation mechanism is operated through the second switch such that using the single operating member and arranging it to the first operating position causes the carbon dioxide flow from the carbon dioxide cylinder to pass through the carbonation head into the water in the water container.

According to the invention in the first operating position of the single operating member, the second switch is arranged to activate the carbonation mechanism so that the carbonation mechanism presses the valve of the carbon dioxide cylinder to produce carbon dioxide in the water in the water container.

In other words, the carbonation mechanism operating the valve with an actuator presses the valve, and typically a pin valve, so that carbon dioxide flows out from the carbon dioxide cylinder.

According to the invention the first switch and the second switch are mechanical switches that are operated by a mechanical connection from the single operating member.

In other words, the first switch and the second switch are operated through a common operating member which is the single operating member so that by activating part of the single operating member or moving the single operating member into the first operating position the carbonation mechanism is activated and by activating the other part of the single operating member or moving the single operating member into the second operating position the door operating mechanism is activated.

According to the invention the single operating member having a first operating position arranged to operate the carbonation mechanism and a second operating position arranged to operate the door operating mechanism . The single operating member is a rocker switch.

In other words, the rocker switch provides a way to activate two different operations by pressing either side of the rocker switch.

According to the invention the single operating member is provided to the top of the body. Alternatively, the single operating member is provided as at least part of a top surface of the sparkling water making device. Alternatively, the single operating member forms a top surface of the sparkling water making device.

The single operating member may form the top surface or part of the top surface of the sparkling water device such that the single operating member is hidden as part of the body of the sparkling water device and by pressing the upper surface or part of the upper surface the door opening mechanism or the carbonation mechanism is activated.

According to the invention the sparkling water making device comprises a security mechanism which prevents carbonation when the door or the sliding door is in the open position so that the opening to the container compartment is open and accessible from outside the container compartment. In other words, the security mechanism allows carbonation only when the door or the sliding door is in the closed position so that the container compartment is closed and without access from outside the container compartment. The security mechanism is connected to the second switch which operates the carbonation mechanism. Alternatively, or in addition the security mechanism is connected to the first switch operating the door operating mechanism to detect the position of the sliding door.

In other words, the security mechanism is arranged to detect the position of the sliding door, and in the event of the open position of the sliding door, the security mechanism is arranged to prevent carbonation, whereby the carbonation mechanism does not work. In the event of the closed position of the sliding door, the security mechanism is arranged to allow carbonation, whereby the carbonation mechanism is operable.

According to the invention the body structure comprising an outer shell of the sparkling water device, and the container compartment is provided within the outer shell such that the sliding door forms part of the outer shell of the sparkling water device in the closed position.

In other words, the sliding door may form part of the outer shell of the sparkling water device so that when the sliding door is in the open position the outer shell provides a path to the container compartment.

According to the invention the outer shell having an outer shell opening, and in the closed position the sliding door is arranged to cover both the outer shell opening and the opening of the container compartment, and in the open position the outer shell opening, and the opening of the container compartment are both open.

According to the invention the sparkling water making device comprises a body having a cylindrical form such that the container compartment is provided within the body. In other words, the body has an outer surface which forms a cylindrical outer shell for the sparkling water making device and the container compartment is provided within the cylindrical outer shell. The opening to the container compartment is provided through the cylindrical outer shell and the sliding door is arranged to move within the cylindrical outer shell. Also, the cylinder compartment is provided within the cylindrical outer shell. The first switch and/or the second switch or the common switch is provided in connection with the top surface of the cylindrical body of the sparkling water making device. In a preferable embodiment of the invention the single operating member having two separate positions for operating the sparkling water making device forms the top surface of the cylindrical body of the sparkling water making device. The sliding door is curved and arranged to move between the open position and the closed position along a curved path within the cylindrical outer shell of the body of the sparkling water making device.

According to the invention the single operating member is a two stage member having the first operating position and the second operating position. This way the sparkling water making device only requires the single operating member.

An advantage of the invention is that the sparkling water making device is operated through a single operating member having a first operating position in which the carbonation head is arranged to carbonate water in the water container, and a second operating position in which the door is arranged to be moved from the closed position to the open position. This means that the door cannot be opened during the carbonation of the water because the single operating member can be in one position at one time. Another advantage of the invention is that the sparkling water making device is completely mechanical device and the carbonation of water can be performed anywhere without the need of electrical power at all.

### BRIEF DESCRIPTION OF THE DRAWINGS

The invention is described in detail by means of specific embodiments with reference to the enclosed drawings, in which
Figure 1 shows a sparkling water making device useful to understand the invention as seen from front;
Figure 2 shows the sparkling water making device of figure 1 as seen from side;
Figure 3 shows another embodiment of the sparkling water making device useful to understand the invention as seen from front;
Figure 4 shows the sparkling water making device of figure 3 as seen from top;
Figure 5 shows a sparkling water making device useful to understand the invention having the sliding door in the closed position;
Figure 6 shows a sparkling water making device useful to understand the invention having the sliding door in the open position;
Figure 7 shows the sparkling water making device of figure 6 as seen from top;
Figure 8 shows the single operating member in a first operating position;
Figure 9 shows the single operating member in a second operating position;
Figure 10 shows another example of the single operating member in a first operating position;
Figure 11 shows the example of the single operating member shown in figure 10 in a second operating position; and
Figure 12 shows still another example of the single operating member not according to the present invention.

### DETAILED DESCRIPTION OF THE INVENTION

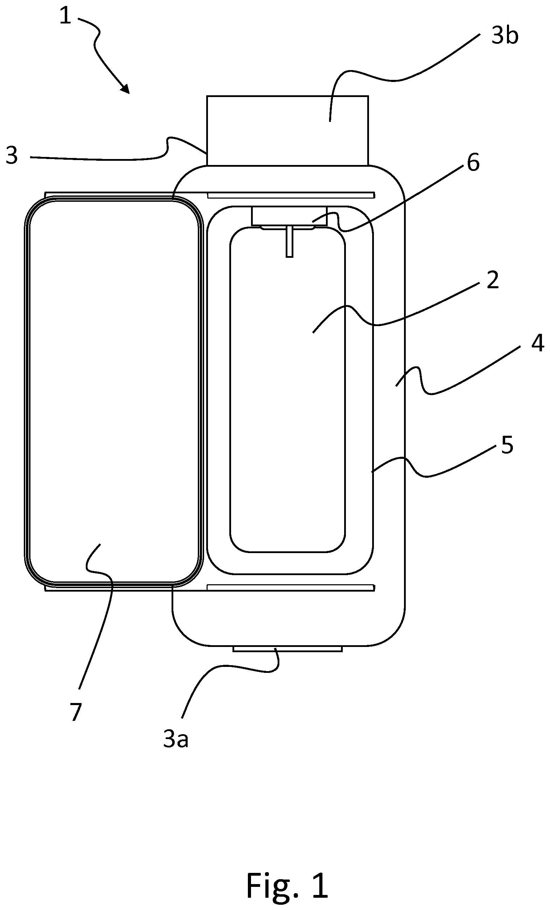

Figure 1 shows a sparkling water making device 1 as seen from front. The sparkling water making device 1 comprises a body 3 having a bottom 3a, a top 3b and a body structure 3c extending between the bottom 3a and the top 3b. The body 3 has a container compartment 4 for the water container 2 which is placed inside the container compartment 4 in the figure 1. The container compartment 4 has an opening 5 through which the water container 2 is placed inside the container compartment 4 and through which the water container 2 can be removed from the container compartment 4. The body 3 further has a carbonation head 6 in connection with the container compartment 4 for connecting the water container 2 to the sparkling water making device 1 and for carbonating water in the water container 2. The carbonation head 6 is provided within the container compartment 4 and the water container 2 is connected to the carbonation head 6 in figure 1. The carbonation head 6 can be movable for example such that it tilts toward the opening 5 when the water container is inserted to the carbonation head 6 or removed from the carbonation head 6, or the carbonation head 6 can be movable for example in vertical direction for connecting to the carbonation head 6 or disconnecting the water container 2 from the carbonation head 6. The body 3 further has a sliding door 7 in connection with the opening 5. The sliding door 7 is arranged to slide between an open position, in which the container compartment 4 is accessible from outside the container compartment 4 through the opening 5, and a closed position, in which the opening 5 is closed with the sliding door 7 to provide a closed container compartment 4. The figure 1 shows the open position in which the opening 5 is not covered with the sliding door 7 but the sliding door 7 is arranged aside the opening 5. In the embodiment of the sparkling water making device 1 in figure 1 the sliding door 7 is arranged to slide sideways, i.e., laterally, from the opening 5, and in that position, i.e. where the sliding door 7 is aside the opening 5, the sliding door 7 can further be pivotable to the side of the sparkling water making device 1 so as not to take up space next to the sparkling water making device 1.

The body structure 3c is not shown in figure 1 since the container compartment 4 covers the view. The sparkling water making device 1 stands so that the bottom 3a is against a standing surface and the top 3b of the body 3 is in an upright position relative to the standing surface. The container compartment 4 is provided between the top 3b and the bottom 3a. The sliding door 7 is arranged to move in a horizontal direction between the open position and the closed position.

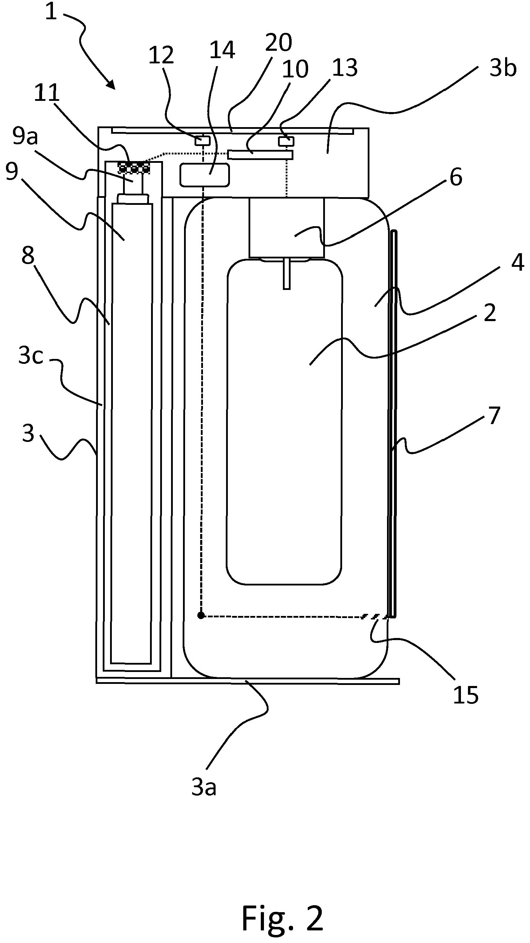

Figure 2 shows the sparkling water making device 1 of figure 1 as seen from side. The figure 2 shows the body structure 3c extending between the top 3b and the bottom 3a of the body 3. The figure 2 also shows the interior of the sparkling water making device 1 showing the carbon dioxide cylinder 9 which is not part of the device 1 but is placed in a cylinder compartment 8 when the sparkling water making device 1 is provided ready for use. The cylinder compartment 8 is preferably arranged in connection with the body structure 3c of the sparkling water making device 1. The top 3b of the body 3 comprises a carbonation mechanism 10 connected to the carbonation head 6 and comprising an actuator 11 arranged to operate a valve 9a of the carbon dioxide cylinder 9. The carbonation mechanism 10 is operated in a first operating position of the single operating member 20 by a connection to a second switch 13 for providing carbon dioxide from the carbon dioxide cylinder 9 through the carbonation head 6 to water provided in the water container 2 for carbonating the water in the water container 2. The flow path of the carbon dioxide from the carbon dioxide cylinder 9 to the carbonation head 6 and in the carbonation head 6 is not shown for the sake of clarity.

The figure 2 also shows a door operating mechanism 14 connected to the sliding door 7 for opening and closing the sliding door 7 in connection with the opening 5 (the opening is not shown in figure 2 because of the side view), which forms an access from outside the sparkling water making device 1 to the container compartment 4. The door operating mechanism 14 is further connected to a first switch 12 which is arranged to activate the door opening mechanism 14 in response to an operation of the single operating member 20 having a connection to the first switch 12. The single operating member 20 is arranged to the top 3b of the body 3 and it forms at least part of the top surface of the sparkling water making device 1. However, the invention is not limited to only this example of the position of the single operating member 20 or its positioning relative to the sparkling water making device 1. The single operating member 20 having connection with the first switch 12 and with the second switch 13 is formed as one single operating member 20. The door operating mechanism 14 is arranged to move the sliding door from the closed position to the open position. The figure 2 shows one embodiment of the door operating mechanism 14 comprising a spring 15 which causes the door to move.

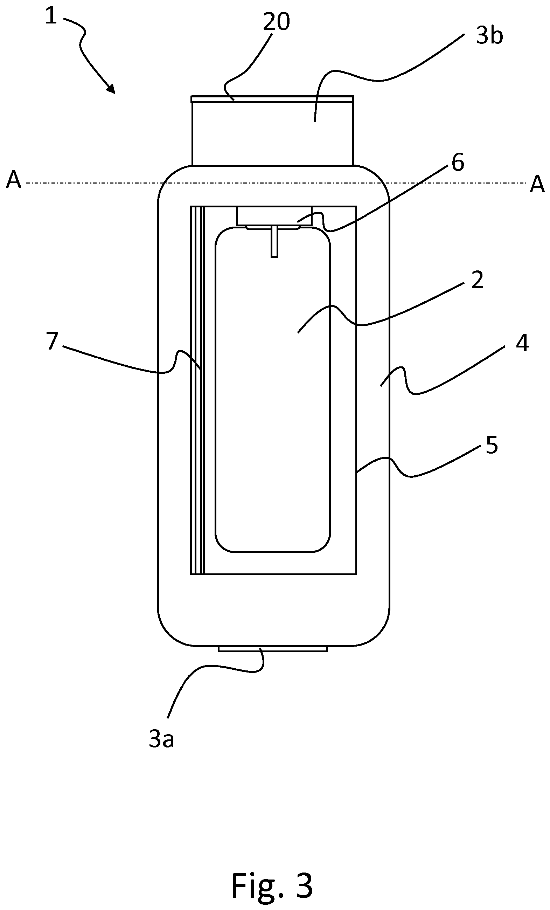

Figure 3 shows another embodiment of the sparkling water making device 1 according to the invention as seen from front. The figure 3 shows the sparkling water making device 1 in a state in which the sliding door 7 is provided in an open state such that the container compartment 4 is accessible from outside the sparkling water making device 1 through the opening 5. The sliding door 7 is provided within the container compartment 4 in this embodiment of the invention and it is slidable between the open position and the closed position inside the container compartment. The water container 2 is connected to the carbonation head 6 inside the container compartment 4. The container compartment 4 is provided between the top 3b and the bottom 3a of the body 3 of the sparkling water making device 1 and the single operating member 20 is arranged to form the top surface of the sparkling water making device 1.

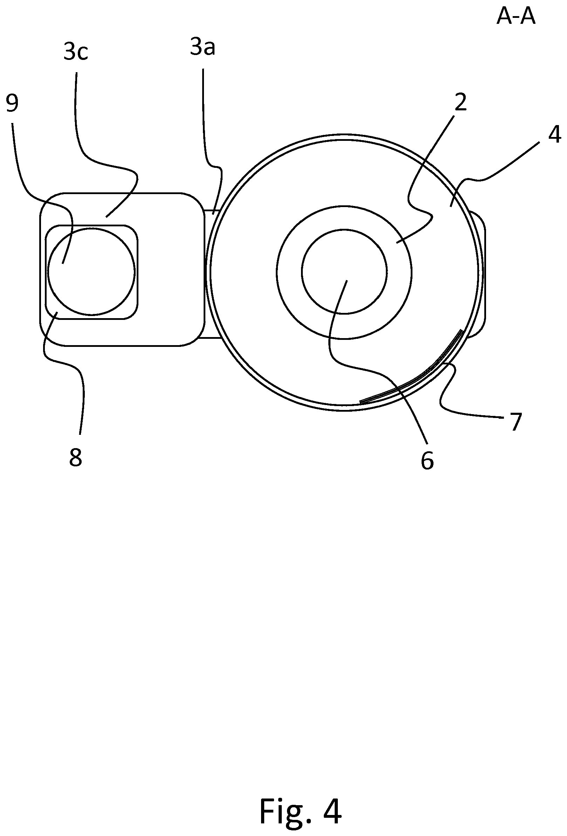

Figure 4 shows the sparkling water making device of figure 3 as seen from the dashed line A-A of figure 3 towards the bottom 3a of the sparkling water making device 1. The cylinder compartment 8 is provided in the body structure 3c of the sparkling water making device 1 and comprises a carbon dioxide cylinder 9 inside the cylinder compartment 8 although the carbon dioxide cylinder 9 is not part of the sparkling water making device 1 similarly as the water container 2 is not part of the sparkling water making device 1. The container compartment 4 is provided in connection with the bottom 3a of the body 3 of the sparkling water making device 1. Alternatively, or in addition the container compartment 4 may form at least part of the bottom 3a of the sparkling water making device 1. Alternatively, or in addition the container compartment 4 forms the bottom 3a of the body 3 of the sparkling water making device 4 such that the container compartment 4 is part of the body 3 of the sparkling water making device 1. The figure 4 further shows that the sliding door 7 is provided within the container compartment 4. The sliding door 7 is arranged to be movable between the open position and the closed position inside the container compartment 4 through the door operating mechanism (not shown in figure 4) or manually by pulling and/or pushing the sliding door 7 between the open position and the closed position.

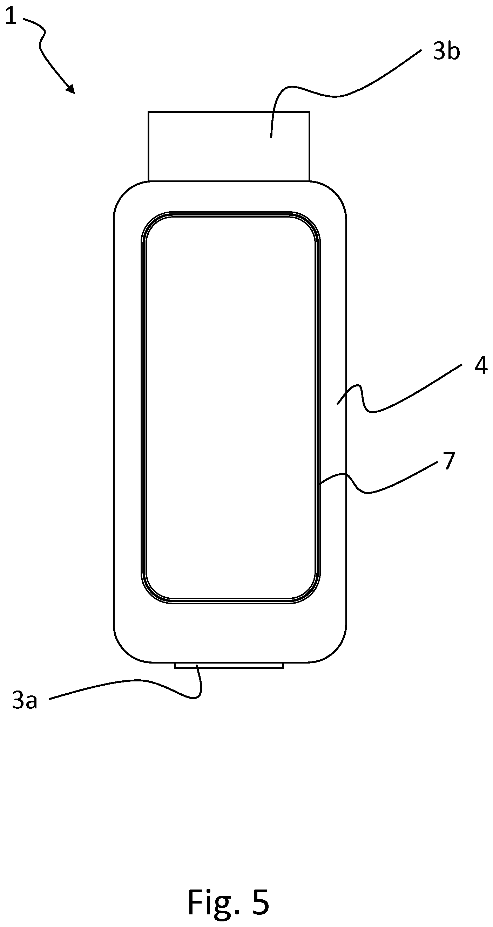

Figure 5 shows a sparkling water making device 1 according to the invention having the sliding door 7 in the closed position. The container compartment 4 is closed with the sliding door 7 provided in the closed position such that the container compartment 4 provides a closed space for the water container 2 inside the container compartment 4 for carbonation with carbon dioxide. As the container compartment is closed, the water container that is made of glass is safe to use even if there is a possibility that the glass water container may break during the carbonation. The container compartment 4 is provided between the top 3b of the body 3 and the bottom 3a of the body 3 of the sparkling water making device 1.

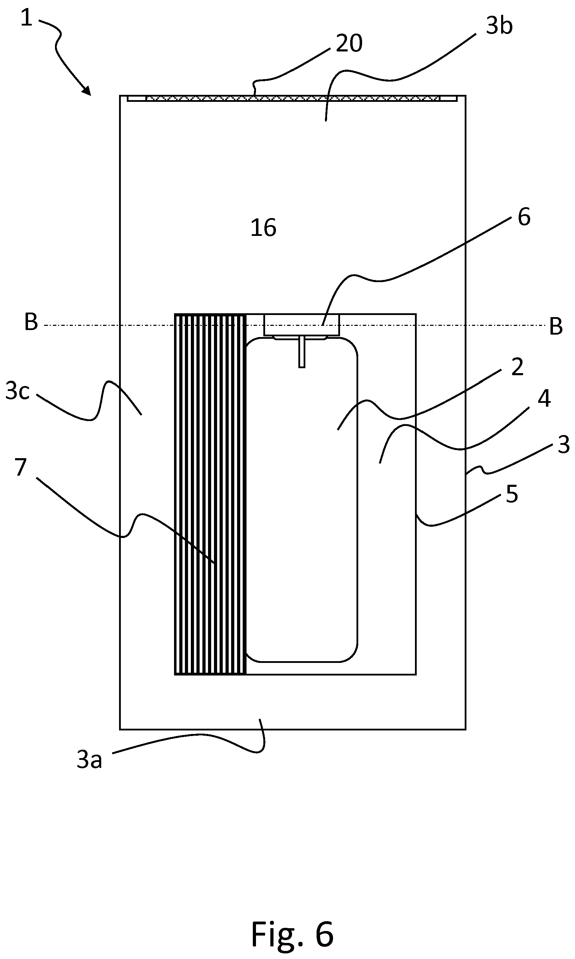

Figure 6 shows a sparkling water making device 1 having the sliding door 7 in the open position. The water container 2 is connected to the carbonation head 6 inside the container compartment 4. The sliding door 7 is arranged in this embodiment of the invention between an outer shell of the sparkling water making device 1 and the container compartment 4 such that the sliding door 7 closes the container compartment 4 from outside the container compartment 4, but inside the body 3 of the sparkling water making device 1 such that the sliding door 8 is not arranged outside the sparkling water making device 1. In other words, the body structure 3c of the sparkling water making device 1 comprises the outer shell 16 and the container compartment is provided within the outer shell 16 such that the sliding door 7 is provided in between the outer shell 16 and the container compartment 4. In the closed position of the sliding door 7 the sliding door 7 forms part of the outer shell when the sliding door 7 covers the opening to the container compartment 4. The bottom 3a is formed by the container compartment 4 provided inside the outer shell 16 together with the outer shell 16 at the bottom. The sparkling water making device comprising the first switch 12 and the second switch 13 are operated by the single operating member 20 which is provided at the top 3b of the body 3 of the sparkling water making device 1 forming part of the upper surface of the sparkling water making device 1. The outer shell 16 has a converging opening 5 with the container compartment 4 which is closable with the sliding door 7.

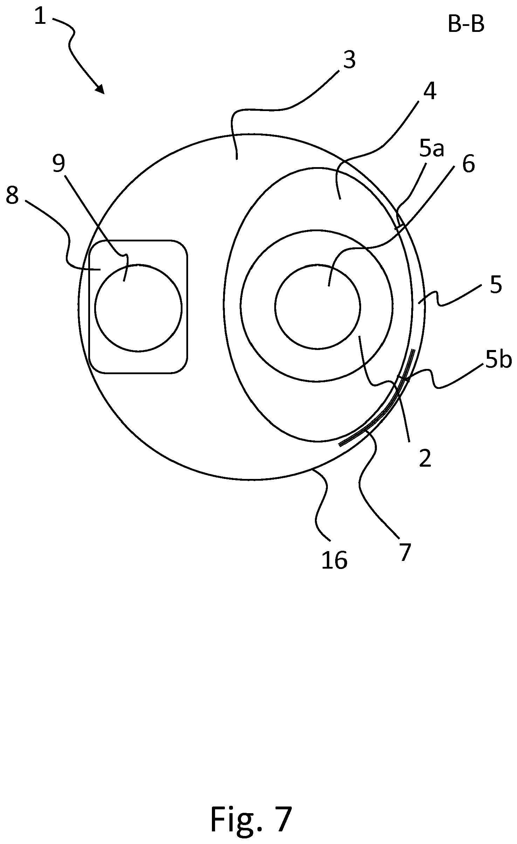

Figure 7 shows the sparkling water making device 1 of figure 6 as seen from the dashed line B-B of figure 6 towards the bottom 3a of the sparkling water making device 1. This figure shows the position of the sliding door 7 between the outer shell 16 of the sparkling water making device 1 and the container compartment 4. The container compartment 4 is provided within the body 3 of the sparkling water making device 1 inside the outer shell 16. The opening 5 to the container compartment 4 is arranged to extend from the outer shell 16 to the container compartment 4. Figure 7 shows the side walls 5a, 5b of the opening 5 which define the opening in horizontal direction. As can be seen from figure 7, the sliding door 7 is arranged to move in a space between the container compartment 4 and the outer shell 16 of the sparkling water making device 1. In other words, the sliding door 7 is provided outside the container compartment 4 but inside the outer shell 16. The water container 2 is connected to the carbonation head 6 in the container compartment 4. The body 3 of the sparkling water making device 1 further encloses a cylinder compartment 8 having a carbon dioxide cylinder 9 inside the cylinder compartment 8.

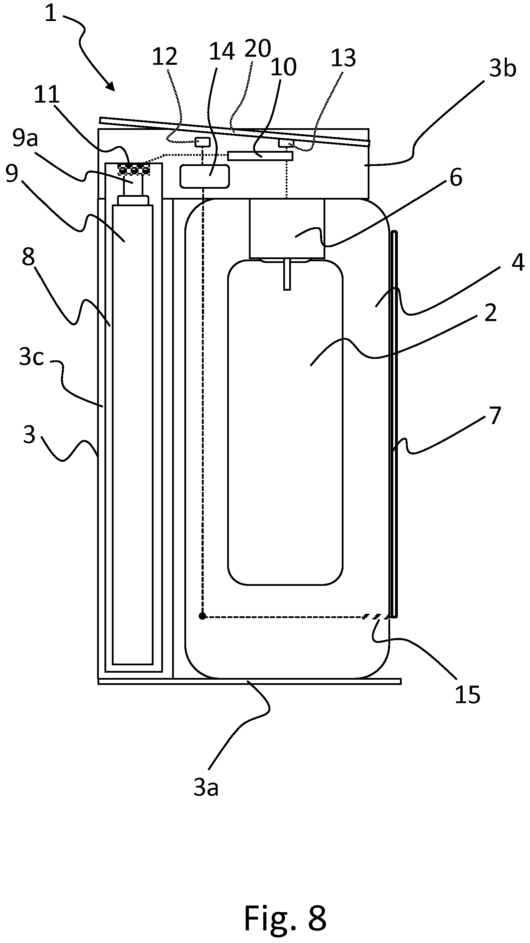

Figure 8 shows the sparkling water making device 1 as shown in figure 2. However, in figure 1 the single operating member 20 was shown a neutral position. As the sparkling water making device 1 is the same as shown in figure 2 all of the features of it are not repeated in this context but only the single operating member 20 and its function is described in detail. The body structure 3c extends between the top 3b and the bottom 3a of the body 3. The single operating mechanism 20 having the connection with the first switch 12 and the second switch 13 forms most of the upper surface of the top 3b of the body 3 of the sparkling water making device 1. In this figure the single operating mechanism 20 is in the first operating position so that the second switch 13 is activated. This means that the carbonation mechanism 10 operates for providing carbon dioxide from the carbon dioxide cylinder 9 through the carbonation head 6 to water provided in the water container 2 for carbonating the water in the water container 2. By pressing the single operating member 20 into the first operating position the second switch 13 activates the carbonation mechanism 10 which is connected to the carbonation head 6 and comprising an actuator 11 arranged to operate a valve 9a of the carbon dioxide cylinder 9. As the valve 9a of the carbon dioxide cylinder 9 is pressed, carbon dioxide is released from the carbon dioxide cylinder 9 through the carbonation head 6 into the water in the water container 2. The flow path of the carbon dioxide from the carbon dioxide cylinder 9 to the carbonation head 6 and in the carbonation head 6 is not shown for the sake of clarity.

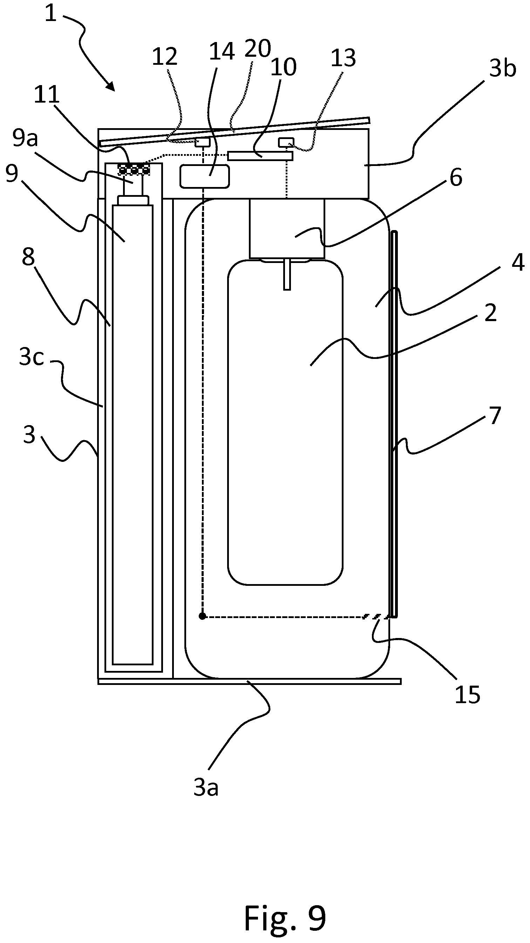

Figure 9 shows the single operating mechanism 20 in the second operating position in which the first switch 12 is activated. The door operating mechanism 14 is connected to the sliding door 7 for opening and closing the sliding door 7 in connection with the opening 5 (the opening is not shown in figure 2 because of the side view), which forms an access from outside the sparkling water making device 1 to the container compartment 4. The door operating mechanism 14 is further connected to a first switch 12 which is arranged to activate the door opening mechanism 14 in response to moving the single operating member 20 to the second operating position. The single operating member 20 having the connection with the first switch 12 and the second switch 13 is arranged to the top 3b of the body 3 and it forms at least part of the top surface of the sparkling water making device 1. The door operating mechanism 14 is arranged to move the sliding door 7 from the closed position to the open position. As the carbonation of the water has been completed the user has pressed the single operating member 20 into the second operating position in which the first switch 12 activates the door operating mechanism 14 which in turn activates in this example the spring 15 so that the tension of the spring is released, and the door moves from the closed position to the open position.

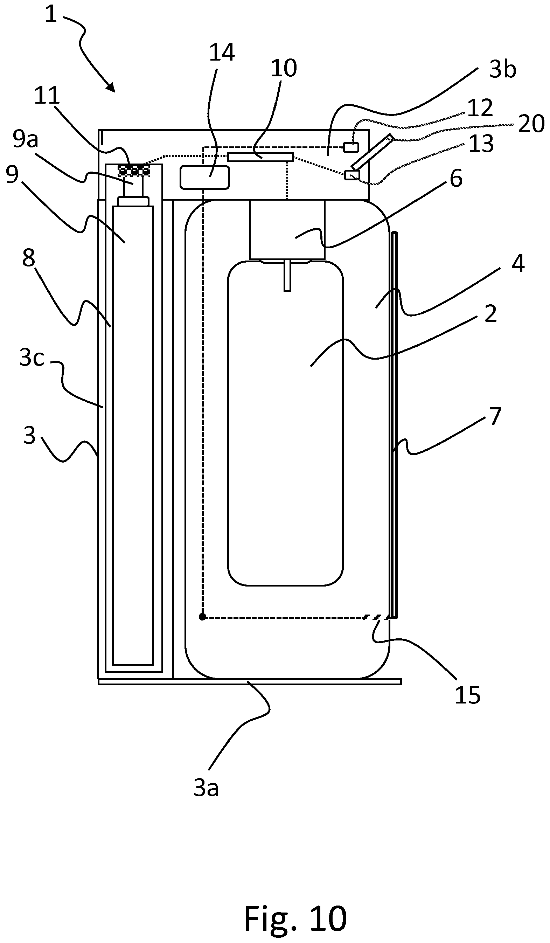

Figure 10 shows an example of the single operating member 20 in a first operating position. The single operating member 20 is in this example a lever with two positions, the first operating position and the second operating position. In the figure 10 the lever is in the first operating position in which the carbonation head 6 is arranged to carbonate water in the water container 2. The lever as the single operating member 20 is in mechanical contact with the second switch 13 which operates the carbonation mechanism 10 for providing carbon dioxide from the carbon dioxide cylinder 9 through the carbonation head 6 for carbonating the water in the water container 2. The second switch 13 is activated in the first operating position of the single operating member 20. The operation of the second switch 13 is according to what has been previously described in this application, so it is not repeated here. In this position of the single operating member 20, the first switch 12 is inactive and without mechanical connection to the single operating member 20. The sparkling water making device 1 is the same as shown in figure 2 except for the single operating member 20 which is different.

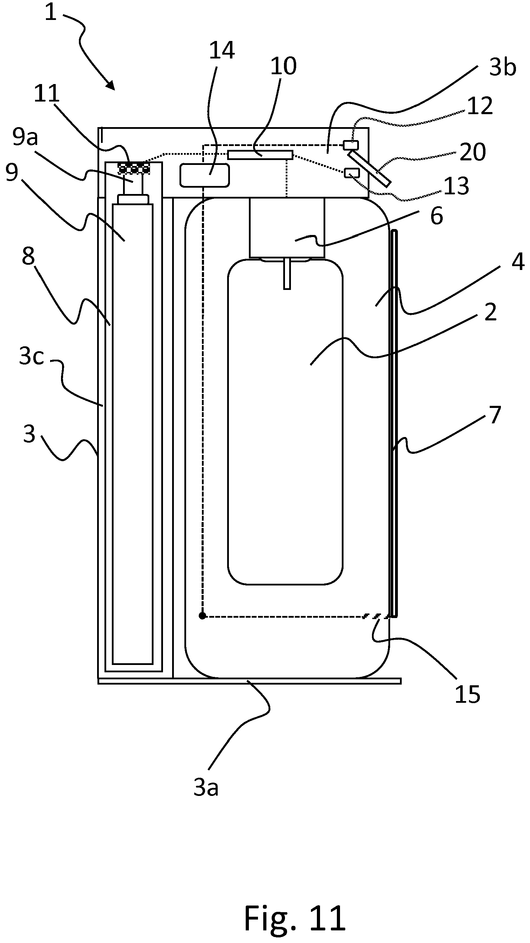

Figure 11 on the other hand shows the single operating member 20 in the second operating position. The lever as the single operating member 20 is turned from the first position shown in figure 10 to the second position in which the first switch 12 is activated. By activating the first switch 12 in the second operating position of the single operating member 20 the door operating mechanism 14 is activated so that the door operating mechanism 14 releases the door 7 to move from the closed position to the open position.

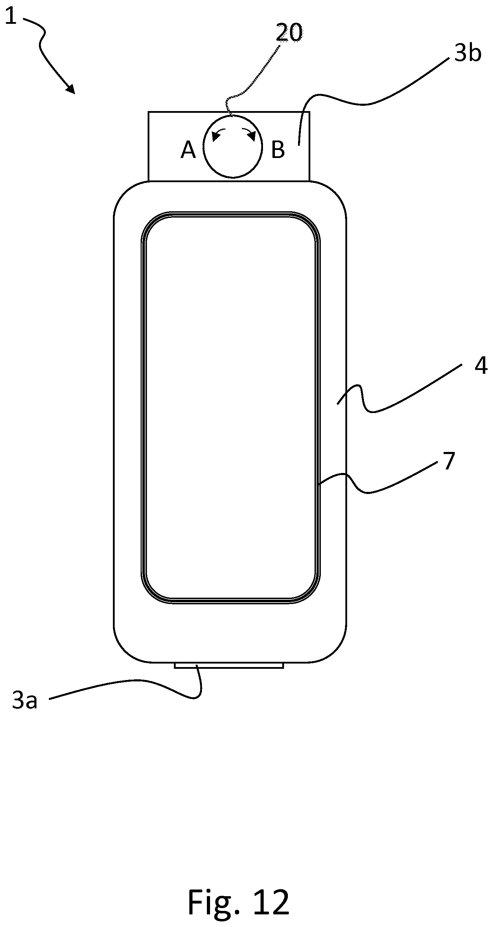

Figure 12 shows another example which is not part of the present invention of the single operating member 20 which is a rotating button operating such that the first operating position is reached by turning the button clockwise and the second operating position is reached by turning the button counter clockwise. The first and second operating position are described earlier in the context of this application and therefore not repeated here. Turning the button activates the first switch or the second switch depending on which way the button is turned.

The single operating member 20 is therefore as described in figures 8-12 a two stage member having the first operating position and the second operating position. This way the sparkling water making device 1 only requires the single operating member 20.

The invention has been described above with reference to the examples shown in the figures. However, the invention is in no way restricted to the above examples but may vary within the scope of the claims.

## Claims

1. A sparkling water making device (1) for carbonating water in a water container (2) with pressurized gas, wherein the sparkling water making device (1) comprises:
a body (3) having a bottom (3a), a top (3b) and a body structure (3c) extending between the bottom (3a) and the top (3b), the body having:
a container compartment (4) for the water container (2), the container compartment (4) having an opening (5) through which the water container (2) is placed inside the container compartment (4);
a carbonation head (6) in connection with the container compartment (4) for connecting the water container (2) to the sparkling water making device (1) and for carbonating water in the water container (2);
a carbonation mechanism (10) connected to the carbonation head (6);
a door (7) in connection with the opening (5), the door (7) being arranged to move between an open position, in which the container compartment (4) is accessible from outside the container compartment (4) through the opening (5), and a closed position, in which the opening (5) is closed with the door (7) to provide a closed container compartment (4);
a door operating mechanism (14) connected to the door (7); and
a single operating member (20) for operating both the carbonation head (6) and the door (7), **characterized in that** the single operating member (20) is a rocker switch providing activation of two different operations by pressing either side of the rocker switch, in which
a first switch (12) is arranged to operate the door operating mechanism (14) for moving the door (7), the first switch (12) is arranged to activate the door operating mechanism (14) so that the door operating mechanism (14) releases the door (7) to move from the closed position to the open position, and
a second switch (13) is arranged to operate the carbonation mechanism (10) for providing carbon dioxide from the carbon dioxide cylinder (9) through the carbonation head (6) for carbonating the water in the water container (2) the first and second switches being operated through the single operating member.

2. A sparkling water making device (1) according to claim 1, **characterized in that** in the door (7) is a sliding door (7), the sliding door (7) is provided in connection with the opening (5), the sliding door (7) being arranged to slide between the open position, in which the container compartment (4) is accessible from outside the container compartment (4) through the opening (5), and the closed position, in which the opening (5) is closed with the sliding door (7) to provide a closed container compartment (4).

3. A sparkling water making device (1) according to claim 1 or 2, **characterized in that** the single operating member (20) having
a first operating position in which the carbonation head (6) is arranged to carbonate water in the water container (2), and
a second operating position in which the door (7) is arranged to be moved from the closed position to the open position.

4. A sparkling water making device (1) according to any previous claim, **characterized in that** the door operating mechanism (14) is operated by the single operating member (20).

5. A sparkling water making device (1) according to claim 3 or 4, **characterized in that** the first switch (12) is activated in the second operating position of the single operating member (20).

6. A sparkling water making device (1) according to claim 5, **characterized in that** in the second operating position of the single operating member (20), the first switch (12) is arranged to activate the door operating mechanism (14) so that the door operating mechanism (14) releases the door (7) to move from the closed position to the open position.

7. A sparkling water making device (1) according to claim 5, **characterized in that** in the second operating position of the single operating member (20), the first switch (12) is arranged to release excess pressure from the water container (2) connected to the carbonation head (6), and to activate the door operating mechanism (14) so that the door operating mechanism (14) releases the door (7) to move from the closed position to the open position.

8. A sparkling water making device (1) according to claim 7, **characterized in that** the first switch (12) is arranged to release the excess pressure from the water container prior releasing the door (7) to move from the closed position to the open position.

9. A sparkling water making device (1) according to claim 1, **characterized in that** the second switch (13) is activated in the first operating position of the single operating member (20).

10. A sparkling water making device (1) according to claim 1, **characterized in that** in the first operating position of the single operating member (20), the second switch (13) is arranged to activate the carbonation mechanism (10) so that the carbonation mechanism (10) presses the valve of the carbon dioxide cylinder (9) to produce carbon dioxide in the water in the water container (2).

11. A sparkling water making device (1) according to claim 1, **characterized in that** the first switch (12) and the second switch (13) are mechanical switches that are operated by a mechanical connection from the single operating member (20).

12. A sparkling water making device (1) according to any previous claim, **characterized in that**:
the single operating member (20) is provided to the top (3b) of the body (3); or
the single operating member (20) is provided as at least part of a top surface of the sparkling water making device (1), or
the single operating member (20) forms a top surface of the sparkling water making device (1).

## Patentansprüche

1. Sprudelwasserherstellvorrichtung (1) zum Karbonisieren von Wasser in einem Wasserbehälter (2) mit Druckgas, wobei die Sprudelwasserherstellvorrichtung (1) Folgendes umfasst:
einen Körper (3), der einen Boden (3a), eine Oberseite (3b) und eine sich zwischen dem Boden (3a) und der Oberseite (3b) erstreckende Körperstruktur (3c) aufweist, wobei der Körper Folgendes aufweist:
ein Behälterfach (4) für den Wasserbehälter (2), wobei das Behälterfach (4) eine Öffnung (5) aufweist, durch die der Wasserbehälter (2) im Inneren des Behälterfachs (4) platziert wird;
einen Karbonisierungskopf (6) in Verbindung mit dem Behälterfach (4) zum Verbinden des Wasserbehälters (2) mit der Sprudelwasserherstellvorrichtung (1) und zum Karbonisieren von Wasser in dem Wasserbehälter (2);
einen mit dem Karbonisierungskopf (6) verbundenen Karbonisierungsmechanismus (10);
eine Tür (7) in Verbindung mit der Öffnung (5), wobei die Tür (7) dazu angeordnet ist, sich zwischen einer offenen Position, in der das Behälterfach (4) von außerhalb des Behälterfachs (4) durch die Öffnung (5) zugänglich ist, und einer geschlossenen Position, in der die Öffnung (5) mit der Tür (7) geschlossen ist, um ein geschlossenes Behälterfach (4) bereitzustellen, zu bewegen;
einen mit der Tür (7) verbundenen Türbetriebsmechanismus (14); und
ein Einzelbetriebselement (20) zum Betreiben von sowohl dem Karbonisierungskopf (6) als auch der Tür (7), **gekennzeichnet dadurch, dass** das Einzelbetriebselement (20) ein Kippschalter ist, der eine Aktivierung von zwei unterschiedlichen Betriebsabläufen durch Drücken einer der beiden Seiten des Kippschalters bereitstellt, in dem
ein erster Schalter (12) dazu angeordnet ist, den Türbetriebsmechanismus (14) zum Bewegen der Tür (7) zu betreiben, der erste Schalter (12) dazu angeordnet ist, den Türbetriebsmechanismus (14) zu aktivieren, sodass der Türbetriebsmechanismus (14) die Tür (7) dazu freigibt, sich von der geschlossenen Position in die offene Position zu bewegen, und
ein zweiter Schalter (13) dazu angeordnet ist, den Karbonisierungsmechanismus (10) zum Bereitstellen von Kohlendioxid aus dem Kohlendioxidzylinder (9) durch den Karbonisierungskopf (6) zum Karbonisieren des Wassers in dem Wasserbehälter (2) zu betreiben, wobei der erste und der zweite Schalter durch das Einzelbetriebselement betrieben werden.

2. Sprudelwasserherstellvorrichtung (1) nach Anspruch 1, **gekennzeichnet dadurch, dass** in der Tür (7) eine Schiebetür (7) ist, die Schiebetür (7) in Verbindung mit der Öffnung (5) bereitgestellt ist, wobei die Schiebetür (7) dazu angeordnet ist, sich zwischen der offenen Position, in der das Behälterfach (4) von außerhalb des Behälterfachs (4) durch die Öffnung (5) zugänglich ist, und der geschlossenen Position, in der die Öffnung (5) mit der Schiebetür (7) geschlossen ist, um ein geschlossenes Behälterfach (4) bereitzustellen, zu verschieben.

3. Sprudelwasserherstellvorrichtung (1) nach Anspruch 1 oder 2, **gekennzeichnet dadurch, dass** das Einzelbetriebselement (20) Folgendes aufweist:
eine erste Betriebsposition, in der der Karbonisierungskopf (6) dazu angeordnet ist, Wasser in dem Wasserbehälter (2) zu karbonisieren, und
eine zweite Betriebsposition, in der die Tür (7) dazu angeordnet ist, von der geschlossenen Position in die offene Position bewegt zu werden.

4. Sprudelwasserherstellvorrichtung (1) nach einem der vorstehenden Ansprüche, **gekennzeichnet dadurch, dass** der Türbetriebsmechanismus (14) durch das Einzelbetriebselement (20) betrieben wird.

5. Sprudelwasserherstellvorrichtung (1) nach Anspruch 3 oder 4, **gekennzeichnet dadurch, dass** der erste Schalter (12) in der zweiten Betriebsposition des Einzelbetriebselements (20) aktiviert ist.

6. Sprudelwasserherstellvorrichtung (1) nach Anspruch 5, **gekennzeichnet dadurch, dass** in der zweiten Betriebsposition des Einzelbetriebselements (20) der erste Schalter (12) dazu angeordnet ist, den Türbetriebsmechanismus (14) zu aktivieren, sodass der Türbetriebsmechanismus (14) die Tür (7) dazu freigibt, sich von der geschlossenen Position in die offene Position zu bewegen.

7. Sprudelwasserherstellvorrichtung (1) nach Anspruch 5, **gekennzeichnet dadurch, dass** in der zweiten Betriebsposition des Einzelbetriebselements (20) der erste Schalter (12) dazu angeordnet ist, überschüssigen Druck aus dem mit dem Karbonisierungskopf (6) verbundenen Wasserbehälter (2) freizugeben und den Türbetriebsmechanismus (14) zu aktivieren, sodass der Türbetriebsmechanismus (14) die Tür (7) dazu freigibt, sich von der geschlossenen Position in die offene Position zu bewegen.

8. Sprudelwasserherstellvorrichtung (1) nach Anspruch 7, **gekennzeichnet dadurch, dass** der erste Schalter (12) dazu angeordnet ist, den überschüssigen Druck aus dem Wasserbehälter vor dem Freigeben der Tür (7) dazu, sich von der geschlossenen Position in die offene Position zu bewegen, freizugeben.

9. Sprudelwasserherstellvorrichtung (1) nach Anspruch 1, **gekennzeichnet dadurch, dass** der zweite Schalter (13) in der ersten Betriebsposition des Einzelbetriebselements (20) aktiviert ist.

10. Sprudelwasserherstellvorrichtung (1) nach Anspruch 1, **gekennzeichnet dadurch, dass** in der ersten Betriebsposition des Einzelbetriebselements (20) der zweite Schalter (13) dazu angeordnet ist, den Karbonisierungsmechanismus (10) zu aktivieren, sodass der Karbonisierungsmechanismus (10) das Ventil des Kohlendioxidzylinders (9) drückt, um Kohlendioxid in dem Wasser in dem Wasserbehälter (2) hervorzubringen.

11. Sprudelwasserherstellvorrichtung (1) nach Anspruch 1, **gekennzeichnet dadurch, dass** der erste Schalter (12) und der zweite Schalter (13) mechanische Schalter sind, die durch eine mechanische Verbindung von dem Einzelbetriebselement (20) betrieben werden.

12. Sprudelwasserherstellvorrichtung (1) nach einem der vorstehenden Ansprüche, **gekennzeichnet dadurch, dass**:
das Einzelbetriebselement (20) an der Oberseite (3b) des Körpers (3) bereitgestellt ist; oder
das Einzelbetriebselement (20) als mindestens ein Teil einer oberen Fläche der Sprudelwasserherstellvorrichtung (1) bereitgestellt ist, oder
das Einzelbetriebselement (20) eine obere Fläche der Sprudelwasserherstellvorrichtung (1) ausbildet.

## Revendications

1. Dispositif de fabrication d'eau pétillante (1) pour carbonater de l'eau dans un récipient d'eau (2) avec du gaz sous pression, dans lequel le dispositif de fabrication d'eau pétillante (1) comprend :
un corps (3) présentant une partie inférieure (3a), une partie supérieure (3b) et une structure de corps (3c) s'étendant entre la partie inférieure (3a) et la partie supérieure (3b), le corps présentant :
un compartiment de récipient (4) pour le récipient d'eau (2), le compartiment de récipient (4) présentant une ouverture (5) à travers laquelle le récipient d'eau (2) est placé à l'intérieur du compartiment de récipient (4) ;
une tête de carbonatation (6) en connexion avec le compartiment de récipient (4) pour connecter le récipient d'eau (2) au dispositif de fabrication d'eau pétillante (1) et pour carbonater de l'eau dans le récipient d'eau (2) ;
un mécanisme de carbonatation (10) connecté à la tête de carbonatation (6) ;
une porte (7) en connexion avec l'ouverture (5), la porte (7) étant agencée pour se déplacer entre une position ouverte, dans laquelle le compartiment de récipient (4) est accessible depuis l'extérieur du compartiment de récipient (4) à travers l'ouverture (5), et une position fermée, dans laquelle l'ouverture (5) est fermée avec la porte (7) pour fournir un compartiment de récipient (4) fermé ;
un mécanisme d'actionnement de porte (14) connecté à la porte (7) ; et
un élément d'actionnement unique (20) pour actionner à la fois la tête de carbonatation (6) et la porte (7), **caractérisé en ce que** l'élément d'actionnement unique (20) est un interrupteur à bascule fournissant l'activation de deux actions différentes en appuyant de chaque côté de l'interrupteur à bascule, dans lequel
un premier interrupteur (12) est agencé pour actionner le mécanisme d'actionnement de porte (14) pour déplacer la porte (7), le premier interrupteur (12) est agencé pour activer le mécanisme d'actionnement de porte (14) de sorte que le mécanisme d'actionnement de porte (14) libère la porte (7) pour qu'elle se déplace depuis la position fermée vers la position ouverte, et
un deuxième interrupteur (13) est agencé pour actionner le mécanisme de carbonatation (10) pour fournir du dioxyde de carbone depuis le cylindre de dioxyde de carbone (9) à travers la tête de carbonatation (6) pour carbonater l'eau dans le récipient d'eau (2), les premier et deuxième interrupteurs étant actionnés à travers l'élément d'actionnement unique.

2. Dispositif de fabrication d'eau pétillante (1) selon la revendication 1, **caractérisé en ce que** dans la porte (7) se trouve une porte coulissante (7), la porte coulissante (7) est fournie en connexion avec l'ouverture (5), la porte coulissante (7) étant agencée pour coulisser entre la position ouverte, dans laquelle le compartiment de récipient (4) est accessible depuis l'extérieur du compartiment de récipient (4) à travers l'ouverture (5), et la position fermée, dans laquelle l'ouverture (5) est fermée avec la porte coulissante (7) pour fournir un compartiment de récipient (4) fermé.

3. Dispositif de fabrication d'eau pétillante (1) selon la revendication 1 ou 2, **caractérisé en ce que** l'élément d'actionnement unique (20) présente
une première position d'actionnement dans laquelle la tête de carbonatation (6) est agencée pour carbonater de l'eau dans le récipient d'eau (2), et
une deuxième position d'actionnement dans laquelle la porte (7) est agencée pour être déplacée depuis la position fermée vers la position ouverte.

4. Dispositif de fabrication d'eau pétillante (1) selon l'une quelconque revendication précédente, **caractérisé en ce que** le mécanisme d'actionnement de porte (14) est actionné par l'élément d'actionnement unique (20).

5. Dispositif de fabrication d'eau pétillante (1) selon la revendication 3 ou 4, **caractérisé en ce que** le premier interrupteur (12) est activé dans la deuxième position d'actionnement de l'élément d'actionnement unique (20).

6. Dispositif de fabrication d'eau pétillante (1) selon la revendication 5, **caractérisé en ce que** dans la deuxième position d'actionnement de l'élément d'actionnement unique (20), le premier interrupteur (12) est agencé pour activer le mécanisme d'actionnement de porte (14) de sorte que le mécanisme d'actionnement de porte (14) libère la porte (7) pour qu'elle se déplace depuis la position fermée vers la position ouverte.

7. Dispositif de fabrication d'eau pétillante (1) selon la revendication 5, **caractérisé en ce que** dans la deuxième position d'actionnement de l'élément d'actionnement unique (20), le premier interrupteur (12) est agencé pour libérer la pression en excès depuis le récipient d'eau (2) connecté à la tête de carbonatation (6), et pour activer le mécanisme d'actionnement de porte (14) de sorte que le mécanisme d'actionnement de porte (14) libère la porte (7) pour qu'elle se déplace depuis la position fermée vers la position ouverte.

8. Dispositif de fabrication d'eau pétillante (1) selon la revendication 7, **caractérisé en ce que** le premier interrupteur (12) est agencé pour libérer la pression en excès depuis le récipient d'eau avant la libération de la porte (7) pour qu'elle se déplace depuis la position fermée vers la position ouverte.

9. Dispositif de fabrication d'eau pétillante (1) selon la revendication 1, **caractérisé en ce que** le deuxième interrupteur (13) est activé dans la première position d'actionnement de l'élément d'actionnement unique (20).

10. Dispositif de fabrication d'eau pétillante (1) selon la revendication 1, **caractérisé en ce que** dans la première position d'actionnement de l'élément d'actionnement unique (20), le deuxième interrupteur (13) est agencé pour activer le mécanisme de carbonatation (10) de sorte que le mécanisme de carbonatation (10) appuie sur la soupape du cylindre de dioxyde de carbone (9) pour produire du dioxyde de carbone dans l'eau dans le récipient d'eau (2).

11. Dispositif de fabrication d'eau pétillante (1) selon la revendication 1, **caractérisé en ce que** le premier interrupteur (12) et le deuxième interrupteur (13) sont des interrupteurs mécaniques qui sont actionnés par une connexion mécanique depuis l'élément d'actionnement unique (20).

12. Dispositif de fabrication d'eau pétillante (1) selon l'une quelconque revendication précédente, **caractérisé en ce que** :
l'élément d'actionnement unique (20) est fourni sur la partie supérieure (3b) du corps (3) ; ou
l'élément d'actionnement unique (20) est fourni au moins en tant que partie d'une surface supérieure du dispositif de fabrication d'eau pétillante (1), ou
l'élément d'actionnement unique (20) forme une surface supérieure du dispositif de fabrication d'eau pétillante (1).
